# EUROPEAN PATENT APPLICATION

(11) **EP 3 100 930 A1**
(43) Date of publication of application: **07.12.2016**
(21) Application number: 14880890.0
(22) Date of filing: 10.12.2014
(51) Int. Cl.: B61L 25/02, G06Q 50/30

(54) **INFORMATION PROVIDING SYSTEM AND METHOD**

(30) Priority: 31.01.2014 JP 2014016354
(71) Applicant: Hitachi, Ltd., Chiyoda-ku Tokyo 100-8280 (JP)
(72) Inventor: TAKAGI Akira, Tokyo 100-8280 (JP); MOCHIZUKI Tomoyuki, Tokyo 100-8280 (JP); SHIMURA Akitoshi, Tokyo 100-8280 (JP); YAMAUCHI Tsukasa, Tokyo 100-8280 (JP)
(74) Representative: Moore, Graeme Patrick
(86) International application number: PCT/JP2014/082613
(87) International publication number: WO 2015/114955

(57) **Abstract**

A user may not necessarily desire information about train arrival predicted time based on the current time, and instead wish to know the located position of a train at a future time desired by the user. An operation managing device managing train operation information and an information providing device providing the user's terminal with information are provided. The operation managing device is provided with an operation information storage unit storing the train operation information. The information providing device is provided with a desired time estimation unit estimating a time desired by the user and a station used by the user, a located position prediction unit that predicts a train located position on the basis of the operation information acquired from the operation managing device and the time estimated by the desired time estimation unit, and an information delivery unit transmitting the predicted located position to the terminal.

## Description

### BACKGROUND

The present invention relates to a system and method by which information is provided to a user's terminal.

The technique disclosed in Patent Document 1 is an example of the background art of the present technical field. Patent Document 1 discloses a technique by which a train location information providing device compares reference schedule information with train information, calculates the delay time of each train with reference to the current time, calculates the estimated arrival time at each station according to the delay time, reference schedule time, inter-station distance/time information, information on closed areas, and train operation instruction information, and transmits the estimated arrival time according to train line information and station information inputted from a user terminal.

### Related Art Document

Patent Document 1: JP 2010-116102 A

### SUMMARY

However, the user does not necessarily wish for the estimated arrival time of trains based on the current time, and in some cases, the user may wish to know the location of trains at a time in the future, which is a time relevant to the user. If, for example, the user is on board a train en route from the user's departure station to a transfer station, then the user may wish to know a time in the future at which the train to which the user would transfer will arrive at the transfer station.

In order to solve the above described problem and achieve the purpose, an information system according to the present invention includes an operation management device configured to manage operation information of a train, and an information providing device configured to provide information to a terminal of a user. The operation management device includes an operation information storage unit that stores operation information of the train. The information providing device includes:
a desired time estimation unit configured to estimate a time desired by the user and a station to be used by the user; a train location estimation unit configured to estimate a location of the train on the basis of the operation information acquired from the operation management device, and the time and the station estimated by the desired time estimation unit; and an information transmission unit configured to transmit the estimated train location to the terminal.

According to the present invention, it is possible to provide information on the location of a train at a time in the future that is predicted to be relevant to the user.

### BRIEF DESCRIPTION OF THE DRAWINGS

FIG. 1 shows a configuration a system.
FIG. 2 shows a hardware configuration of a server.
FIG. 3 shows a software configuration of an information providing server.
FIG. 4 shows an estimated station congestion table 210.
FIG. 5 shows a station congestion determination table 211.
FIG. 6 shows an estimated train location table 212.
FIG. 7 shows a user type table 213.
FIG. 8 shows a rider state table 214.
FIG. 9 shows a station staff state table 215.
FIG. 10 shows an in-station walking time table 216.
FIG. 11 shows a flowchart of a desired time information transmission process.
FIG. 12 shows a flowchart of a desired time estimation process.
FIG. 13 shows an input screen image in an information terminal.
FIG. 14 shows an output screen image in the information terminal.

### DETAILED DESCRIPTION OF EMBODIMENTS

Embodiments of an information providing system will be described in detail below with reference to the attached drawings.

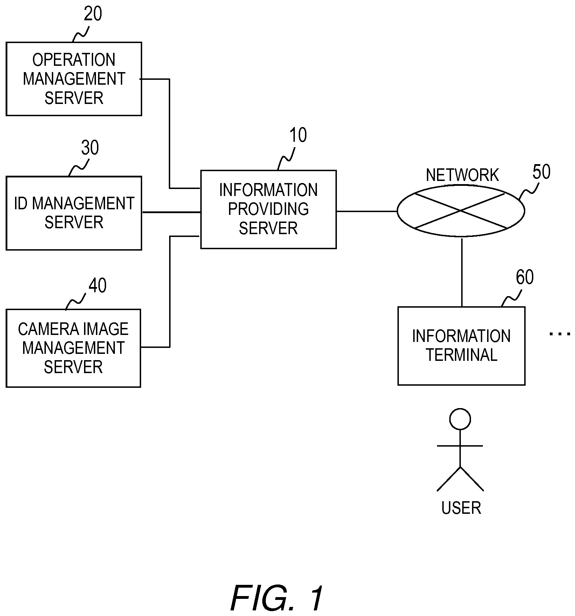

FIG. 1 shows a configuration example of a system. An information providing server 10 is connected to an operation management server 20, an ID management server 30, and a camera image management server 40, and is connected to an information terminal 60 through a network 50.

The operation management server 20 is a server to manage the operation of trains and stores schedule information and the location of trains. The information providing server 10 can acquire schedule information and the location of trains from the operation management server 20.

The ID management server 30 is a server to manage IDs of transit system IC cards, and retains entry/exit information. The information providing server 10 can acquire entry/exit information from the ID management server 30.

The camera image management server 40 is a server to manage images from cameras installed within the station and at railway platforms, and retains camera images. The information providing server 10 can acquire camera images from the camera image management server 40. The camera image management server need not necessarily be a server to manage camera images and simply needs to be a server to transmit information regarding the number of people in the station and on the railway platforms (the number of people in the station and on railway platforms may be detected by lidar, for example).

The information terminal 60 is held by a user and receives information from the information providing server 10 through the network 50 and displays this information.

That is, an information system includes: an operation management device that manages operation information of a train; and an information providing device that provides information to a terminal of a user, wherein the operation management device includes an operation information storage unit that stores operation information of the train, and wherein the information providing device includes: a desired time estimation unit that estimates a time desired by the user and a station to be used by the user; a train location estimation unit that estimates a location of the train on the basis of the operation information acquired from the operation management device, and the time and the station estimated by the desired time estimation unit; and an information transmission unit that transmits the estimated train location to the terminal.

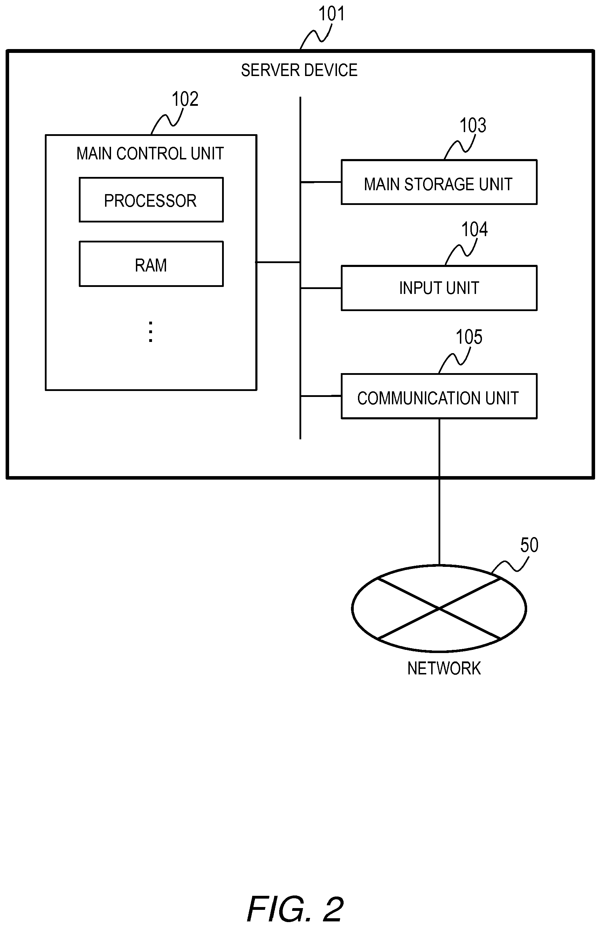

FIG. 2 shows a hardware configuration example of each server shown in FIG. 1. The server 101 shown in FIG. 2 includes a primary control unit 102, a primary storage unit 103, an input unit 104, and a communication unit 105.

The primary control unit 102 controls information processing in the server 101 by the processor executing programming code stored in the primary storage unit 103.

The primary storage unit 103 stores information pertaining to the server 101 in a non-volatile manner.

The user performs input through the input unit 104 to the server 101 if it is necessary to manually input information pertaining to the server 101.

The communication unit 105 connects to the communication units 105 of other servers and other information terminals 60 through the network 50 to exchange information with other servers or information terminals.

The present configuration can be achieved with conventionally well-known devices by using a CPU (central processing unit) and RAM (random access memory) for the primary control unit 102, a hard disk for the primary storage unit 103, a keyboard for the input unit 104, and Ethernet (registered trademark) for the communication unit 105.

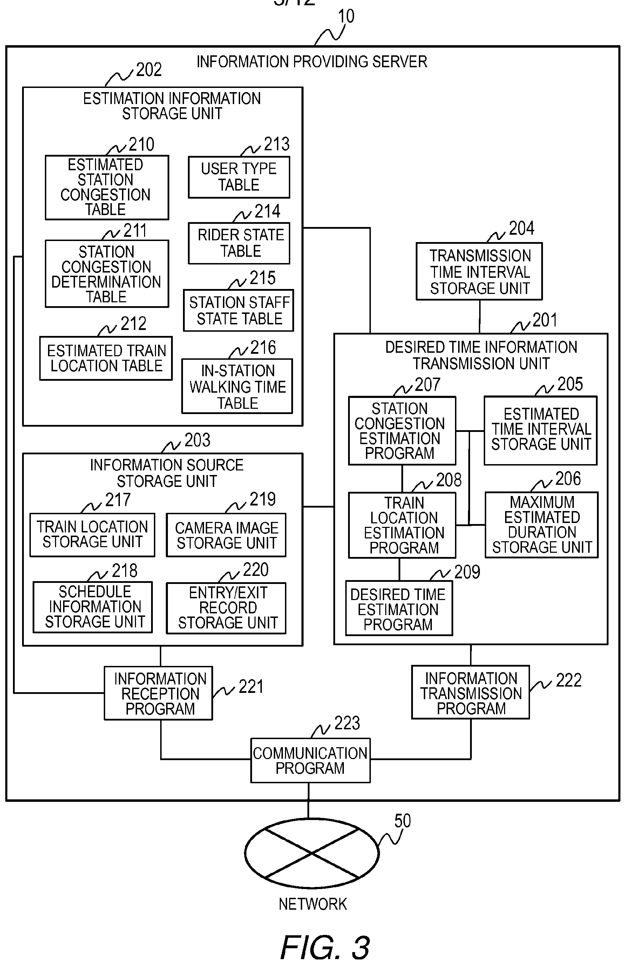

FIG. 3 shows a software configuration of the information providing server 10 shown in FIG. 1. As shown in FIG. 3, the information providing server 10 includes a desired time information transmission unit 201, an estimation information storage unit 202, an information source storage unit 203, a transmission time interval storage unit 204, an information reception program 221, an information transmission program 222, and a communication program 223. These take the form of software programs and data stored in the main storage unit 103 shown in FIG. 2, and when running these programs, the data and programs are read by the RAM and executed by the CPU (processor).

The desired time information transmission unit 201 includes an estimated time interval storage unit 205, a maximum estimated duration storage unit 206, a station congestion estimation program 207, a train location estimation program 208, and a desired time estimation program 209.

The estimation information storage unit 202 includes an estimated station congestion table 210, a station congestion determination table 211, an estimated train location table 212, a user type table 213, a rider state table 214, a station staff state table 215, and an in-station walking time table 216.

The information source storage unit 203 includes a train location storage unit 217, a schedule information storage unit 218, a camera image storage unit 219, and an entry/exit record storage unit 220.

The transmission time interval storage unit 204 stores the time interval at which the information providing server 10 transmits information to the user. The transmission time interval is set by a manager of the information providing server 10, taking into consideration the performance or the like of the server. A time interval of 10 seconds is set, for example.

The information reception program 221 receives information from other devices connected to the information providing server 10 and from the information terminal 60 through the network 50.

The information transmission program 222 transmits information to other devices connected to the information providing server 10 and to the information terminal 60 through the network 50.

The communication program 223 exchanges data with communication programs of other devices connected to the information providing server 10 and with the information terminal 60 through the network 50.

The estimated time interval storage unit 205 stores the time interval estimated by the station congestion estimation program 207 and the train location estimation program 208. The estimated time interval is set by a manager of the information providing server 10, taking into consideration the performance or the like of the server. If a time interval of 10 seconds is set, for example, then the station congestion estimation program 207 and the train location estimation program 208 estimate the station congestion and train location every 10 seconds, that is, 10 seconds in the future and 20 seconds in the future from the current time.

The maximum estimated duration storage unit 206 stores the maximum duration estimated by the station congestion estimation program 207 and the train location estimation program 208. The estimated maximum duration is set by a manager of the information providing server 10, taking into consideration the performance or the like of the server. A time interval of 10 seconds is set, for example. If a duration of 30 minutes is set, for example, then the station congestion estimation program 207 and the train location estimation program 208 estimate the station congestion and train location up to 30 minutes in the future from the current time.

The station congestion estimation program 207 estimates the congestion at respective stations from information stored in the train location storage unit 217, the schedule information storage unit 218, the camera image storage unit 219, and the entry/exit record storage unit 220. This estimation method can be a conventionally well-known method such as estimating the number of people appearing in a camera image or estimating the movement patterns of riders from past entry/exit records. The congestion at the respective stations estimated by the station congestion estimation program 207 is stored in the estimated station congestion table 210.

The train location estimation program 208 estimates the location of respective trains from information stored in the train location storage unit 217 and the schedule information storage unit 218. The estimation method here can be the method shown in Patent Document 1. The locations of the respective trains estimated by the train location estimation program 208 are stored in the estimated train location table 212.

The desired time estimation program 209 estimates the times desired by the users with reference to the user type table 213, rider state table 214, and station staff state table 215.

The estimated station congestion table 210 stores the congestion at the respective stations estimated by the station congestion estimation program 207, in the estimated station congestion table 210.

The station congestion determination table 211 stores the number of people in the station in correspondence with the degree of congestion in order for the station congestion estimation program 207 to estimate the congestion at the respective stations.

The estimated train location table 212 stores the locations of the respective trains estimated by the train location estimation program 208, in the estimated train location table 212.

The user type table 213 stores the user type. The user types are assumed to be passenger and station staff.

The rider state table 214 stores the rider state.

The station staff state table 215 stores the station staff state.

The in-station walking time table 216 stores the time required to walk from the ticket gate to the platform in the station for each station and degree of congestion.

The train location storage unit 217 stores the location of each train acquired from the operation management server 20.

The schedule information storage unit 218 stores schedule information acquired from the operation management server 20.

The camera image storage unit 219 stores the camera image acquired from the camera image management server 40.

The entry/exit record storage unit 220 stores entry/exit records acquired from the ID management server 30.

That is, the information providing device includes a user type storage unit that stores a type of the user, and the desired time estimation unit changes the time desired by the user and the station used by the user on the basis of the user type.

Also, the information providing system further includes a use history storage unit that stores a use history by the user of the train, wherein if the user type is inside station, the desired time estimation unit infers that a departure station of the user stored in the use history storage unit is the station used by the user, calculates a time at which the user would arrive at the departure station on the basis of the departure station and a current location of the user, and infers that the time of arrival at the departure station is a time desired by the user.

Also, if the user type is inside station, the desired time estimation unit infers that a departure station of the user stored in the use history storage unit is the station used by the user, calculates a time at which the user would arrive at the departure station on the basis of the departure station and a current location of the user, and infers that the time of arrival at the departure station is a time desired by the user.

Additionally, if the user type is inside station, the desired time estimation unit infers that a departure station of the user stored in the use history storage unit is the station used by the user, calculates a time at which the user would arrive at the departure station on the basis of the departure station and a current location of the user, and infers that the time of arrival at the departure station is a time desired by the user.

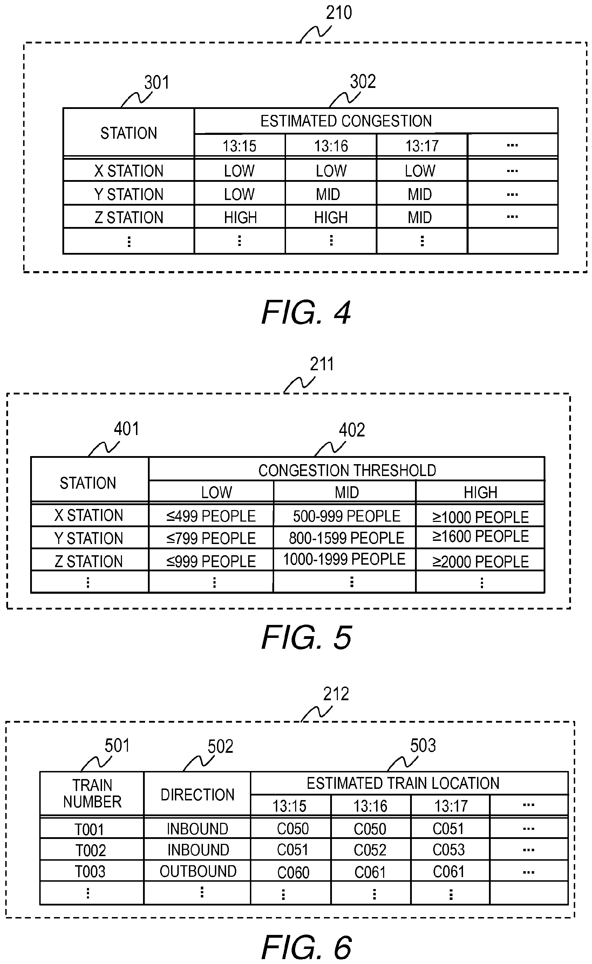

FIG. 4 shows an example of the estimated station congestion table 210. As shown in FIG. 4, the estimated station congestion table 210 includes a station column 301 and an estimated congestion column 302. The estimated station congestion table 210 is sequentially updated according to the station congestion.

The station column 301 is a column for indicating the stations.

The estimated congestion column 302 is a column for indicating the estimated congestion at a given time.

The times under the estimated congestion column 302 are determined by the current time, the estimated time interval stored in the estimated time interval storage unit 205, and the maximum estimated duration stored in the maximum estimated duration storage unit 206.

FIG. 5 shows an example of the station congestion determination table 211. As shown in FIG. 5, the station congestion determination table 211 includes a station column 401 and a congestion threshold column 402. The station congestion determination table 211 is set in advance according to the size of the station.

The station column 401 is a column for indicating the stations.

The congestion threshold column 402 is a column indicating the relationship between the number of people in the station and the congestion.

FIG. 6 shows an example of the estimated train location table 212. As shown in FIG. 6, the estimated train location table 212 includes a train number column 501, a direction column 502, and an estimated train location column 503. The estimated train location table 212 is sequentially updated according to changes in the train location.

The train number column 501 is a column for indicating the train number.

The direction column 502 is a column for indicating the direction of travel of the trains.

The estimated train location column 503 is a column for indicating the estimated train location at a given time. In FIG. 6, it is assumed that the location of the train is detected by track circuits, and the estimated train location is expressed by IDs that are uniquely assigned to the track circuits such as C050 or C051. However, the expression of the estimated train location is not limited thereto, and may be expressed by latitude/longitude coordinates or the like obtained by a GPS device in the train, for example. The times under the track circuit estimated train location column 503 are determined by the current time, the estimated time interval stored in the estimated time interval storage unit 205, and the maximum estimated duration stored in the maximum estimated duration storage unit 206.

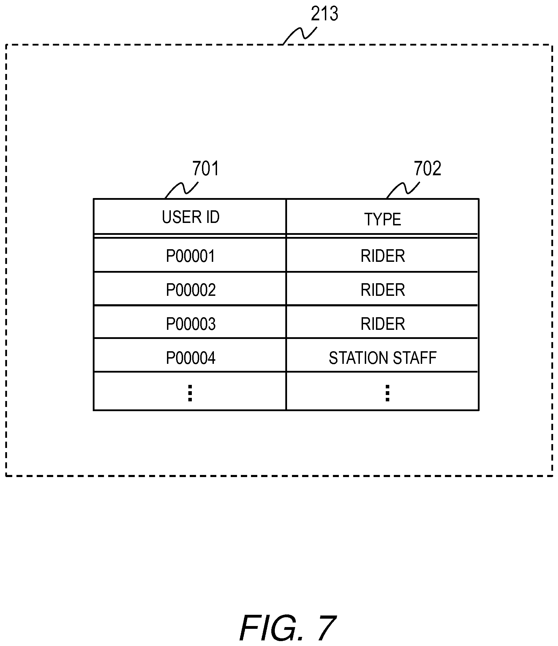

FIG. 7 shows an example of the user type table 213. As shown in FIG. 7, the user type table 213 includes a user ID column 701 and a type column 702. The user type table 213 is set in advance.

The user ID column 701 is a column that indicates IDs that are uniquely assigned to each user.

The type column 702 is a column indicating the user type.

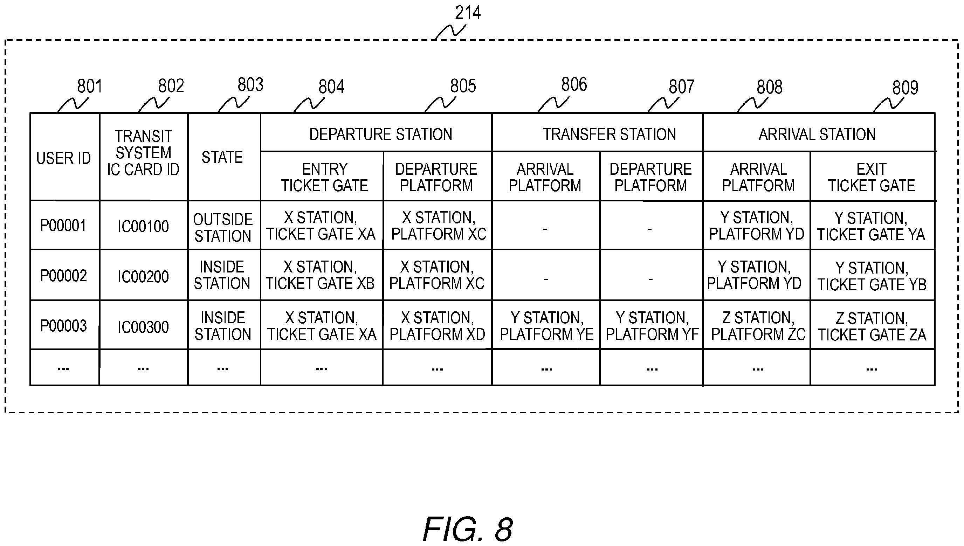

FIG. 8 shows an example of the rider state table 214. As shown in FIG. 8, the rider state table 214 includes the user ID column 801, the transit system IC card ID column 802, the state column 803, the departure station entry ticket gate column 804, the departure station entry departure platform column 805, the transfer station arrival platform column 806, the transfer station departure platform column 807, the arrival station arrival platform 808, and the arrival station exit ticket gate column 809. The rider state table 214 is sequentially updated according to the rider state.

The user ID column 801 is a column that indicates IDs that are uniquely assigned to each user.

The transit system IC card ID column 802 is a column indicating the IDs of transit system IC cards held by riders.

The state column 803 is a column indicating the IDs of transit system IC cards held by riders and the states of riders acquired from the entry/exit records. Here, the state is either "inside station" or "outside of station".

The departure station entry ticket gate column 804 is a column indicating the ticket gate through which the rider would enter the departure station.

The departure station entry departure platform column 805 is a column indicating the platform at the departure station from which the rider would depart.

The transfer station arrival platform column 806 is a column indicating the platform at the transfer station where the rider would arrive. This entry would be blank if there are no transfers.

The transfer station departure platform column 807 is a column indicating the platform at the transfer station where the rider would depart. This entry would be blank if there are no transfers. The number of transfer station arrival platform columns 806 and transfer station departure platform columns 807 increases or decreases depending on the number of transfers.

The arrival station arrival platform 808 is a column indicating the platform at the arrival station where the rider would arrive.

The arrival station exit ticket gate column 809 is a column indicating the ticket gate through which the rider would exit the arrival station.

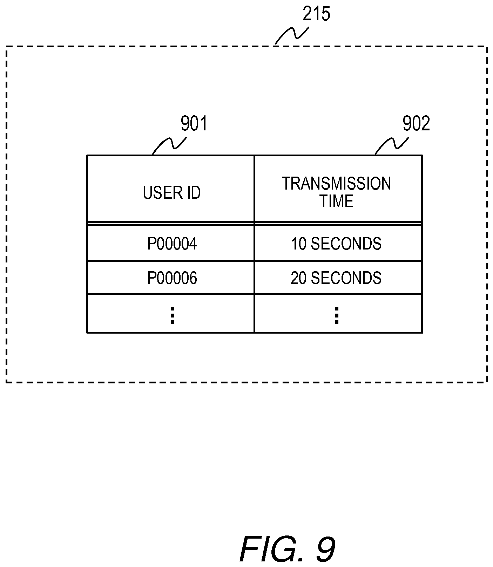

FIG. 9 shows an example of the station staff state table 215. As shown in FIG. 9, the station staff state table 214 includes a user ID column 901 and a transmission time column 902. The station staff state table 214 is set in advance.

The user ID column 901 is a column that indicates IDs that are uniquely assigned to each user.

The transmission time column 902 is a column indicating the amount of time required to transmit information from the information providing server to an information terminal held by a user.

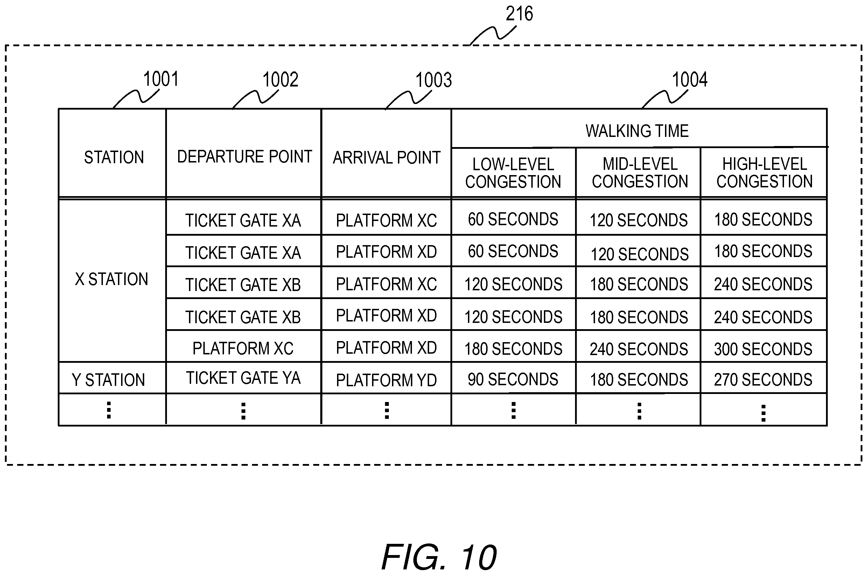

FIG. 10 shows an example of the in-station walking time table 216. As shown in FIG. 10, the in-station walking time table 216 includes a station column 1001, a departure point column 1002, an arrival point column 1003, and a walking time column 1004. The in-station walking time table 216 is set in advance.

The station column 1001 is a column for indicating the stations.

The departure point column 1002 is a column indicating the walking departure point.

The arrival point column 1003 is a column indicating the walking arrival point.

The walking time column 1004 is a column indicating the walking time corresponding to the station, departure point, arrival point, and station congestion.

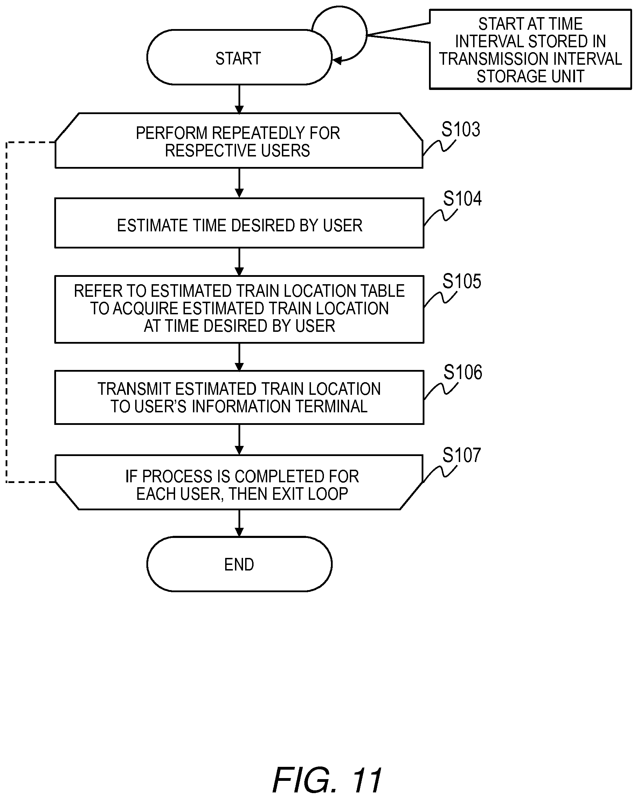

FIG. 11 shows an example of a desired time information transmission process. The process flow shown in FIG. 11 indicates the process for when the desired time information transmission unit 201 transmits information to the user.

Prior to performing the desired time information transmission process, the following process is performed in advance.

The station congestion estimation program 207 estimates the congestion at respective stations from information stored in the train location storage unit 217, the schedule information storage unit 218, the camera image storage unit 219, and the entry/exit record storage unit 220. This estimation method can be a conventionally well-known method such as estimating the number of people appearing in a camera image or estimating the movement patterns of riders from past entry/exit records. The congestion at the respective stations estimated by the station congestion estimation program 207 is stored in the estimated station congestion table 210 (S101).

The train location estimation program 208 estimates the location of respective trains from information stored in the train location storage unit 217 and the schedule information storage unit 218. The locations of the respective trains estimated by the train location estimation program 208 are stored in the estimated train location table 212 (S102). The processes of S101 and S102 above are performed in advance.

The desired time information transmission process thereafter is executed at a time interval stored in the transmission time interval storage unit 204 (10 second interval, for example).

The desired time information transmission unit 201 repeatedly executes the process of steps S104 to S106 for each user stored in the user type table 213 (S103).

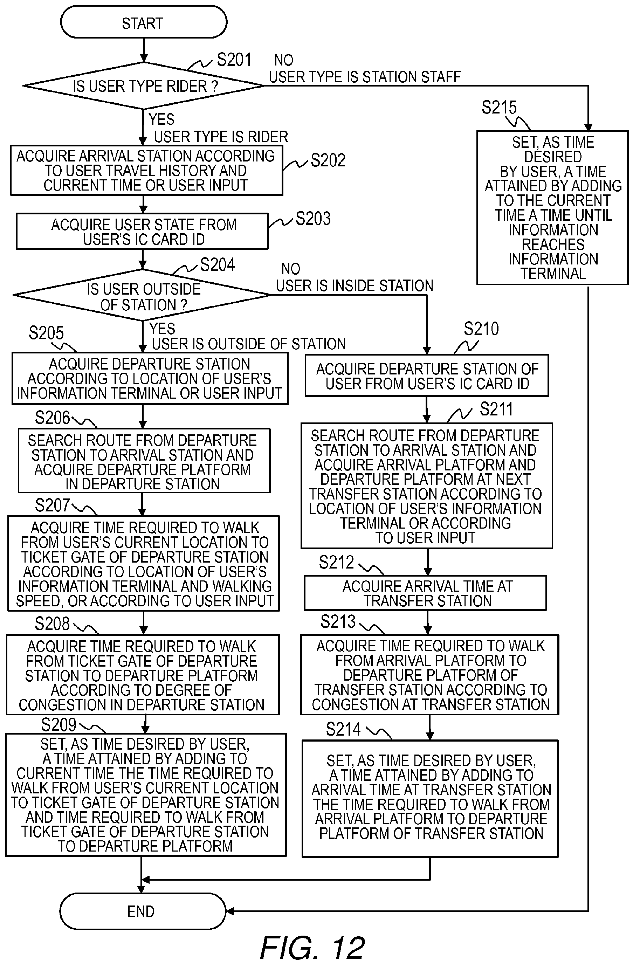

The desired time estimation program 209 estimates the time desired by the user (S104). Details of such processes will be mentioned later in describing FIG. 12.

The desired time information transmission unit 201 refers to the estimated train location table 212 for the desired time estimated in S104, and acquires the estimated train location at the time desired by the user (S105).

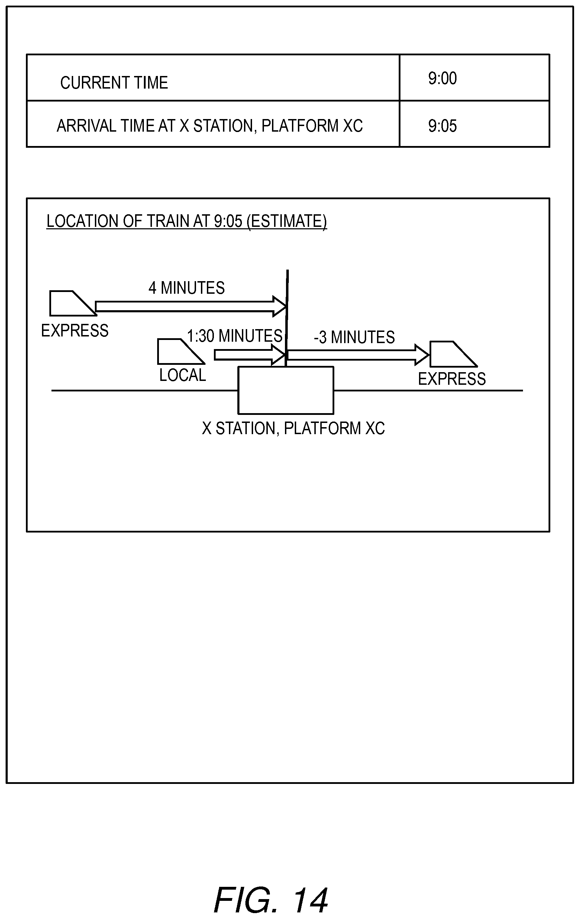

The desired time information transmission unit 201 transmits the estimated train location acquired in S105 to the user's information terminal (S106). An output screen image in the information terminal is shown in FIG. 14. The output screen image shown in FIG. 14 displays the current time, the time estimated in S105 at which a rider would board the train, and the estimated train location at that time as estimated in S106.

If the desired time information transmission unit 201 has executed the process of steps S104 to S106 for each user stored in the user type table 213, the process shown in FIG. 11 is ended (S107).

By performing the process above, it is possible to appropriately provide time information desired by the user according to the user type and state.

FIG. 12 shows an example of a process of a desired time estimation process. The process flow shown in FIG. 12 shows the process when the desired time estimation program 209 estimates the time desired by the user.

The desired time estimation program 209 refers to the user type table 213 and determines whether the user type is "rider" (S201). If the user type is "rider" then the process progresses to S202, and if not (if the user type is "station staff") then the process progresses to S215.

The desired time estimation program 209 estimates the user's arrival station according to the user's past travel history and the current time. By this estimation method, the closest station to the user's residence and the closest station to the user's workplace or school are estimated according to the user's weekday travel history; this estimation method can be a well-known method by which it is determined whether the user is headed to work/ school or headed home according to the current time (if the user is headed to work/ school, then the closest station to work/ school is set as the arrival station, and if the user is headed home, then the closest station to home is set as the arrival station). Alternatively, the arrival station is acquired by user input through the information terminal 60. (S202).

The desired time estimation program 209 acquires the user's state (inside or outside of station) from the user's transit system IC card ID and entry/exit records (S203).

The desired time estimation program 209 determines whether the user state acquired in S203 is "outside of station" (S204). If the user state is "outside of station" then the process progresses to S205, and if not (if the user state is "inside station") then the process progresses to S210.

In other words, the information providing device (information providing server 10) includes a user type storage unit (user type table 213) that stores the user type, and the desired time estimation unit (desired time estimation program 209) changes the time desired by the user and the station used by the user on the basis of the user type.

The desired time estimation program 209 estimates the user's departure station according to location information of the user's information terminal. Alternatively, the departure station is acquired by user input through the information terminal 60 (S205).

The desired time estimation program 209 performs a route search with the departure station acquired in S205 and the arrival station acquired in S202 as inputs, and acquires the departure platform in the departure station. (S206)

The desired time estimation program 209 estimates the time needed for the user to walk from the current location to the entry ticket gate of the departure station according to location information of the user's information terminal, the location information of the departure station acquired in S205, and the average walking time of the user. Alternatively, the time required to walk from the current location to the entry ticket gate of the departure station is acquired by user input through the information terminal 60 (S207).

The desired time estimation program 209 refers to the estimated station congestion table 210 and acquires the estimated degree of congestion at a time attained by adding to the current time the time it would take to walk from the current location acquired in S207 to the entry ticket gate of the departure station. The time required to walk from the entry ticket gate of the departure station to the departure platform is acquired according to the entry ticket gate of the departure station, the departure platform acquired in S206, the acquired estimated degree of congestion, and the in-station walking time table 216.

The desired time estimation program 209 sets, as the time desired by the user, a time attained by adding, to the current time, the time required to walk from the current location acquired in S207 to the entry ticket gate of the departure station, and the time required to walk from the entry ticket gate acquired in S208 to the departure platform (S209). In other words, if the user state is "outside of station", the desired time estimation unit (desired time estimation program 209) infers that the user's arrival station stored in the use history storage unit (entry/exit record storage unit 219) is the station used by the user, calculates the time at which the user would arrive at the arrival station on the basis of the user's current location, and infers that the arrival time at the arrival station is the user's desired time.

The desired time estimation program 209 acquires the user's departure station from the user's transit system IC card ID and entry/exit records (S210).

The desired time estimation program 209 performs a route search with the departure station acquired in S210 and the arrival station acquired in S202 as inputs, and acquires the transfer station and arrival and departure platforms at the transfer station. The correspondences between the departure station and arrival station, and between the transfer station and the arrival and departure platforms of the transfer station are included in the table in advance. The desired time estimation program 209 acquires the arrival platform and departure platform at the next transfer station where the user would transfer according to the location information of the user's information terminal (S211). Riders in the station only change location to a significant degree when they have boarded a train, and thus, it would be easy to acquire the next transfer station in this process. Alternatively, the next transfer station is acquired by user input through the information terminal 60.

The desired time estimation program 209 acquires the time at which the user would arrive at the arrival platform of the next transfer station according to the train location stored in the train location storage unit 217 and the schedule information stored in the schedule information storage unit 218 (S212).

The desired time estimation program 209 refers to the estimated station congestion table 210 and acquires the estimated degree of congestion at a time attained by adding to the current time the time acquired in S212 at which the user would arrive at the arrival platform of the next transfer station. The time required to walk from the arrival platform to the departure platform in the transfer station is acquired according to the arrival platform and departure platform at the transfer station acquired in S211, the acquired estimated degree of congestion, and the in-station walking time table 216 (S213).

The desired time estimation program 209 sets, as the time desired by the user, a time attained by adding the time required to walk from the arrival platform to the departure platform in the transfer station acquired in S213, to the time at which the user would arrive at the arrival platform of the next transfer station, which was acquired in S212 (S214). In other words, if the user type is "inside station", the desired time estimation unit (desired time estimation program 209) infers that the user's departure station stored in the use history storage unit (entry/exit record storage unit 220) is the station used by the user, calculates the time at which the user would arrive at the departure station on the basis of the user's current location, and infers that the arrival time at the departure station is the user's desired time.

The desired time estimation program 209 refers to the station staff state table 215 and sets as the time desired by the user a time acquired by adding to the current time the time required for the information to reach the information terminal (S215). In other words, if the user type is "station staff", then the desired time estimation unit (desired time estimation program 209) calculates the time at which the train location information would reach the terminal on the basis of the time required for information transmission to the terminal held by the station staff member, and infers that the time at which the train location information reaches the terminal is the time desired by the user.

That is, the information providing device includes:
a congestion determination storage unit that determines a degree of congestion in the station; and
an in-station walking time storage unit that stores a walking time in the station according to the degree of congestion in the station, and
the desired time estimation unit of the information providing device additionally considers the walking time in the station corresponding to the degree of congestion in the departure station of the user to estimate a time desired by the user.

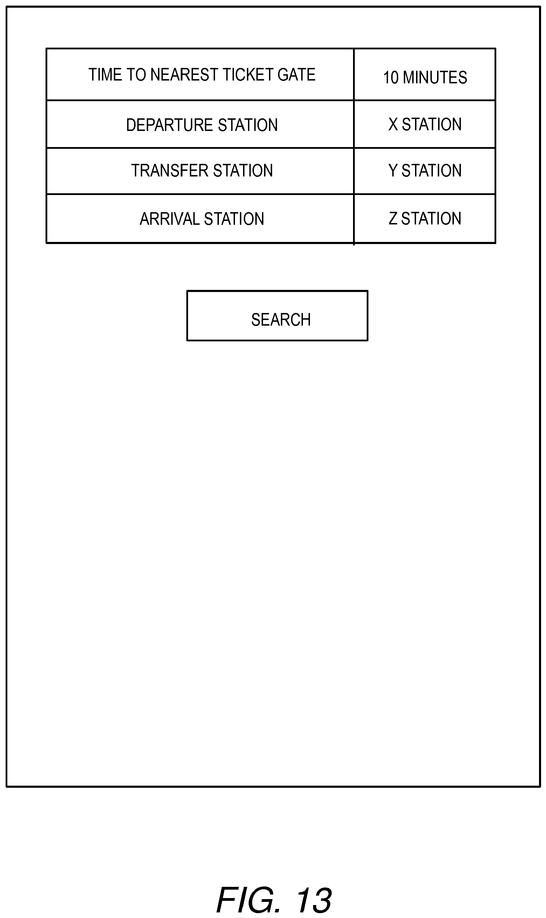

The input screen image in the information terminal is shown in FIG. 13, pertaining to input from the user through the information terminal 60 in S202, S205, S207, and S211. The input screen image shown in FIG. 13 includes the input field for the time required to reach the nearest ticket gate, the input field for the departure station, the input field for the transfer station, and the input field for the arrival station, and results estimated in the process of S202, S205, S207, and S211 appear in those input fields. After the user inputs information as necessary and presses the search button, the screen switches to an output screen image such as shown in FIG. 14.

By performing the process above, it is possible to estimate the time desired by the user according to the user type and state.

The present invention is not limited to the embodiments described above, and modifications to the components can be realized at the implementation stage without departing from the scope of the present invention. Various inventions can be formed by appropriately combining the plurality of components disclosed in the embodiments above. For example, a few components can be omitted from all of the components disclosed in the embodiments. Furthermore, components in differing embodiments may be appropriately combined.

### Description of Reference Characters

- 10: information providing server
- 20: operation management server
- 30: ID management server
- 40: camera image management server
- 201: desired time information transmission unit
- 202: estimation information storage unit
- 203: information source storage unit
- 204: transmission time interval storage unit
- 205: estimated time interval storage unit
- 206: maximum estimated duration storage unit
- 207: station congestion estimation program
- 208: train location estimation program
- 209: desired time estimation program
- 210: estimated station congestion table
- 211: station congestion determination table
- 212: estimated train location table
- 213: user type table
- 214: rider state table
- 215: station staff state table
- 216: in-station walking time table
- 217: train location storage unit
- 218: schedule information storage unit
- 219: camera image storage unit
- 220: entry/exit record storage unit

## Claims

1. An information system, comprising:
an operation management device configured to manage operation information of a train; and
an information providing device configured to provide information to a terminal of a user,
wherein the operation management device includes an operation information storage unit that stores operation information of the train, and
wherein the information providing device includes:
a desired time estimation unit configured to estimate a time desired by the user and a station to be used by the user;
a train location estimation unit configured to estimate a location of the train on the basis of the operation information acquired from the operation management device, and the time and the station estimated by the desired time estimation unit; and
an information transmission unit configured to transmit the estimated train location to the terminal.

2. The information providing system according to claim 1,
wherein the information providing device includes a user type storage unit that stores a type of the user, and
wherein the desired time estimation unit changes the time desired by the user and the station used by the user on the basis of the user type.

3. The information providing system according to claim 2, further comprising:
a use history storage unit configured to store a use history by the user of the train,
wherein, if the user type is inside station, the desired time estimation unit configured to infer that a departure station of the user stored in the use history storage unit is the station used by the user, calculate a time at which the user would arrive at the departure station on the basis of the departure station and a current location of the user, and infer that the time of arrival at the departure station is a time desired by the user.

4. The information providing system according to claim 2, further comprising:
a use history storage unit configured to store a use history by the user of the train,
wherein, if the user type is outside of station, the desired time estimation unit is configured to infer that an arrival station of the user stored in the use history storage unit is the station used by the user, calculate a time at which the user would arrive at the arrival station on the basis of the arrival station and a current location of the user, and infer that the time of arrival at the arrival station is a time desired by the user.

5. The information providing system according to claim 2, further comprising:
a station staff state storage unit configured to store a time required for information transmission to the terminal held by the user,
wherein, if the user type is station staff, the desired time estimation unit configured to calculate a time at which the train location information would reach the terminal on the basis of a time required for information transmission to the terminal held by the station staff, and infer that the time at which the train location information reaches the terminal is a time desired by the user.

6. The information providing system according to claim 3 or 4,
wherein the information providing device further includes:
a congestion determination storage unit configured to determine a degree of congestion in the station; and
an in-station walking time storage unit configured to store a walking time in the station according to the degree of congestion in the station, and
wherein the desired time estimation unit of the information providing device configured to consider additionally the walking time in the station corresponding to the degree of congestion in the departure station of the user to estimate a time desired by the user.

7. An information providing method comprising:
storing, by an operation management device, operation information of a train in an operation information storage unit in advance, and
estimating, by an information providing device, a time desired by a user and a station to be used by the user,
estimating, by the information providing device, a location of the train on the basis of the operation information acquired from the operation management device, and the time and the station estimated by the desired time estimation unit, and
transmitting, by the information providing device, the estimated train location to the terminal.

8. The information providing method according to claim 7, further comprising:
storing, by the information providing device, a type of the user in the user type storage unit in advance; and
changing, by the information providing device, the time desired by the user and the station used by the user on the basis of the user type.

9. The information providing method according to claim 8, further comprising:
storing, by the information providing device, a use history by the user of the train in a use history storage unit in advance; and
if the user type is inside station,
inferring, by the information providing device, that a departure station of the user stored in the use history storage unit is the station used by the user;
calculating, by the information providing device, a time at which the user would arrive at the departure station on the basis of the departure station and a current location of the user; and
inferring, by the information providing device, that the time of arrival at the departure station is a time desired by the user.

10. The information providing method according to claim 8, further comprising:
storing, by the information providing device, a use history by the user of the train in a use history storage unit in advance; and
if the user type is outside of station,
inferring, by the information providing device, that an arrival station of the user stored in the use history storage unit is the station used by the user;
calculating, by the information providing device, a time at which the user would arrive at the arrival station on the basis of the arrival station and a current location of the user; and
inferring, by the information providing device, that the time of arrival at the arrival station is a time desired by the user.

11. The information providing method according to claim 8, further comprising:
storing, by the information providing device, a time required for information transmission to the terminal held by the user in a station staff state storage unit in advance; and
if the user type is station staff,
calculating, by the information providing device, a time at which the train location information would reach the terminal on the basis of a time required for information transmission to the terminal held by the station staff; and
inferring, by the information providing device, that the time at which the train location information reaches the terminal is a time desired by the user.

12. The information providing method according to claim 9 or 10, further comprising:
storing in advance, by the information providing device, a degree of congestion in the station in a congestion determination storage unit;
storing in advance, by the information providing device, a walking time in the station according to the degree of congestion in the station in an in-station walking time storage unit; and
considering, by the information providing device, additionally the walking time in the station corresponding to the degree of congestion in the departure station of the user to estimate a time desired by the user.
